# EUROPEAN PATENT SPECIFICATION

(11) **EP 1 255 417 B1**
(45) Date of publication and mention of the grant of the patent: **11.10.2006**
(21) Application number: 02009787.9
(22) Date of filing: 30.04.2002
(51) Int. Cl.: H04Q 7/32, G06K 19/06

(54) **Apparatus and method for certificating SIM card owner in GSM terminal**
Gerät und Verfahren zur Zertifizierung des SIM-Karteninhabers in einem GSM Endgerät
Appareil et procédé pour certifier le propriétaire de la carte SIM dans un terminal GSM

(30) Priority: 04.05.2001 KR 2001024437; 04.05.2001 KR 2001024438
(43) Date of publication of application: 06.11.2002
(73) Proprietor: LG ELECTRONICS INC., Seoul (KR)
(72) Inventor: Jung, Yong-Hwan, Kwangju (KR); Jo, Sun-Tae, Dongan-Ku, Anyang, Kyungki-Do (KR); Kim, Tae-Gyun, Jangan-Ku, Suwon, Kyungki-Do (KR)
(74) Representative: TER MEER - STEINMEISTER & PARTNER GbR

(56) References cited:
- EP-A- 0 831 629
- WO-A-01/15413
- WO-A-99/64976
- DE-A- 19 902 806
- MAES P: "SUBSCRIBER IDENTITY MODULE FOR PAN-EUROPEAN MOBILE TELEPHONE NETWORK" SMART CARD TECHNOLOGY, XX, XX, vol. 2, 1990, pages 1-13, XP000199579
- PATENT ABSTRACTS OF JAPAN vol. 2000, no. 02, 29 February 2000 (2000-02-29) & JP 11 331334 A (DENSO CORP), 30 November 1999 (1999-11-30)

## Description

### BACKGROUND OF THE INVENTION

### 1. Field of the Invention

The present invention relates to a GSM terminal and particularly, to an apparatus and method for certificating a SIM card owner in a GSM terminal.

### 2. Description of the Background Art

Generally, a Global System for Mobile communication (GSM) terminal using time dividing multiplex connection method uses Subscriber Identity Module (SIM) cards.

The SIM card is a smart card which is removable from a terminal is comprised of a microprocessor and a memory chip. In the memory chip, personal information of a SIM card owner and various kinds of information (phone numbers and network numbers) for operating the terminal are stored and personal certification information such as Personal Identification Number (PIN) and Personal Unblocking Key (PUK) are stored as personal information of the SIM card owner.

Personal certification information stored in the memory chip enables use of the terminal of the SIM card owner by determining whether the SIM card owner is registered for the network when the SIM card is inserted on the mobile communication terminal.

Namely, after installing the SIM card in the GSM terminal, the user inputs the PIN. Then, the microprocessor judges whether the SIM card owner is a user registered with the network comparing the inputted PIN and the pin stored in the memory chip. If the two PINs are identical, the microprocessor allows the user to use the GSM terminal. If the two PINs are not identical, the microprocessor blocks the use of the terminal and in order to release the blocking of the terminal, the PUK must be inputted.

However, conventionally, there was no method to check the SIM card owner other than the method of inputting the personal certification number under the condition of positioning the SIM card in the GSM terminal.

WO 01/15413 A1 describes a telephone device and a method for identifying a telephone device. The telephone device includes a memory for storing image data which is displayed on a display device of the telephone when the telephone is switched on.

WO 99/64976 A1 discloses a method and device for storing and transmitting Avatar information for use in a virtual environment. The Avatar information is stored on a SIM card.

EP 0 831 629 A2 describes a mobile telephone and method for selectively displaying one of the plurality of graphical information sequences during an idle state of the mobile station, when the mobile station is not involved in receiving a call or during a call. The graphical information sequence is displayed in a key-guard state, in a charging state or when the mobile station powered on. The graphic information sequence is stored in an animation array of the memory of the mobile station.

The article of MAES P: "SUBSCRIBER IDENTITY MODULE FOR PAN-EUROPEAN MOBILE TELEPHONE NETWORK" describes a SIM card as a part of a mobile station which contains information related to the subscriber's identity and his specific data. The TMSI which is the code most often used to address the subscriber is stored on the SIM card. The SIM card stores a current value of the PIN code. It contains a PIN change counter, a PIN error counter, a blocking counter and a personal unlocking key.

### SUMMARY OF THE INVENTION

Therefore, an object of the present invention is to provide an apparatus and method for certificating a SIM card owner in a GSM terminal, capable of checking a SIM card owner visually.

Another object of the present invention is to provide a SIM card having a user certification means and an apparatus and method for certificating a SIM card owner in a GSM terminal. The objects are solved by the features of the independent claims.

To achieve these and other advantages and in accordance with the purpose of the present invention, there is provided an apparatus in a GSM terminal comprising a display unit of the GSM terminal and a Subscriber Identity Module card, herein after referred to as SIM card, including a memory chip for storing image data related to the SIM card owner, wherein the memory chip comprises an image data storage unit for storing the image data of the SIM card owner, wherein the GSM terminal is adapted for receiving the image data of the SIM card owner when a power source is switched on and for displaying the image data on the display unit for visually checking the SIM card owner.

At this time, the SIM card is composed of a memory chip and a microprocessor and the memory chip comprises a personal certification storage unit where personal certification information is stored, a registration data storage unit where data related to base station registration are stored and an image data storage unit where image data related to a SIM card owner are stored.

To achieve these and other advantages and in accordance with the purpose of the present invention, there is provided a method for operating a GSM terminal, comprising the steps of positioning a Subscriber Identity Module card, herein after referred to as SIM card, having a memory chip in which the image data of a SIM card owner is stored in the GSM terminal, transmitting image data of the SIM card owner stored in an image data storage unit of the memory chip arranged on the SIM card in advance to the GSM terminal when a power source is switched on, and processing the transmitted image data of the SIM card owner and displaying on a display unit for visually checking the SIM card owner.

To achieve these and other advantages and in accordance with the purpose of the present invention, there is provided a method for certificating a SIM card owner in a GSM terminal comprising the steps of storing image data of a user in the SIM card, positioning the SIM card in a terminal, displaying a selection message asking whether the user certification data to be displayed when a power source is applied and outputting the image data of the user transmitted from the SIM card to a display apparatus on the basis of the selection of the message of the user.

The foregoing and other objects, features, aspects and advantages of the present invention will become more apparent from the following detailed description of the present invention when taken in conjunction with the accompanying drawings.

### BRIEF DESCRIPTION OF THE DRAWINGS

The accompanying drawings, which are included to provide a further understanding of the invention and are incorporated in and constitute a part of this specification, illustrate embodiments of the invention and together with the description serve to explain the principles of the invention.

In the drawings:
Figure 1 is a block diagram showing a first embodiment of an apparatus for checking a SIM card owner in a GSM terminal in accordance with the present invention;
Figure 2 is a detail view showing the SIM card of Figure 1;
Figure 3 is a flow chart showing a method for checking the SIM card owner of Figure 1;
Figure 4 is a view illustrating an example of image data of a user displayed on a display unit of a terminal.

### DETAILED DESCRIPTION OF THE PREFERRED EMBODIMENTS

Reference will now be made in detail to the preferred embodiments of the present invention, examples of which are illustrated in the accompanying drawings.

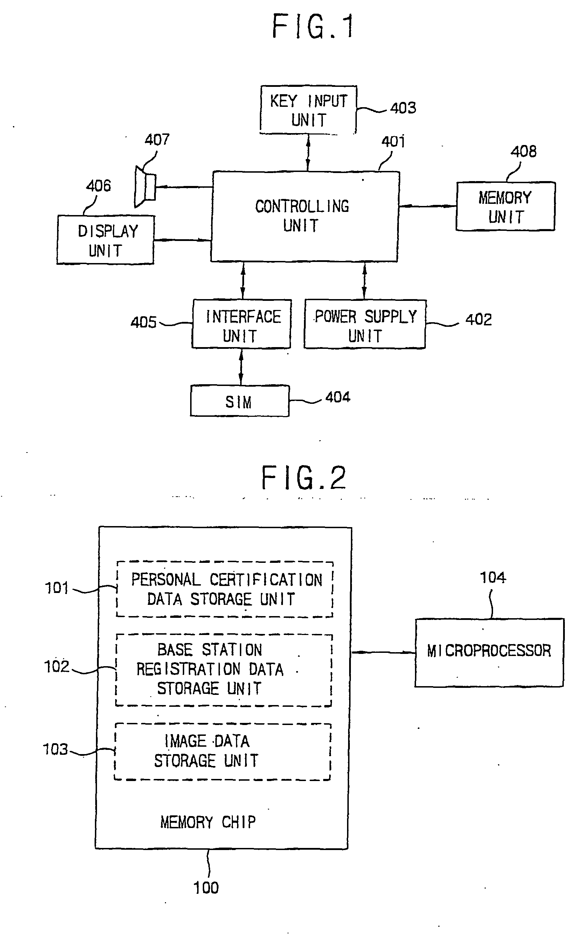

As shown in Figure 1, an apparatus for certificating a SIM card owner in a GSM terminal includes a controlling unit 401 for controlling system and processing signals, a power supply unit 402 for supplying power source needed for a terminal, a key input unit 403 for inputting key data, an interface unit 405 for interfacing the SIM card and the controlling unit 401, a display unit 406 for displaying the image data of the user stored in the SIM card 404, a speaker for outputting voice data included in the image data and a memory unit 408 for storing image data transmitted through the interface unit 405 or wireless data transmitted from or to the terminal.

As shown in Figure 2, the SIM card 404 includes a memory chip 100 and a microprocessor 104 and the memory chip 100 includes a personal certification storage unit 101 where a PIN is stored, a registration data storage unit 102 where data related to base station registration are stored and an image data storage unit 103 where image data (photographs, animations and characters) related to a SIM card owner are stored.

The operation of the apparatus for certificating the SIM card owner in the GSM terminal in accordance with the present invention will be described as follows.

The SIM card owner stores a certain image data capable of certificating the SIM card owner in the memory chip 100 of the SIM card 404 (S1). At this time, the SIM card owner stores image data in the image data storage unit 103 through data transmitted from the base station, PC or wireless internet.

When the user pushes a power button of the key input unit 403 after positioning the SIM card 404 in the GSM terminal, the power supply unit 402 supplies a power source to each device of the GSM terminal by sensing key inputs (S2).

When the power is supplied the microprocessor 104 of the SIM card 404 reads the image data of the SIM card owner from the image data storage unit 103 and transmits the data to the controlling unit 401 through the interface unit 405 (S3). The controlling unit 401 converts the inputted image data in a displayable form and outputs the data to the display unit 406 (S4).

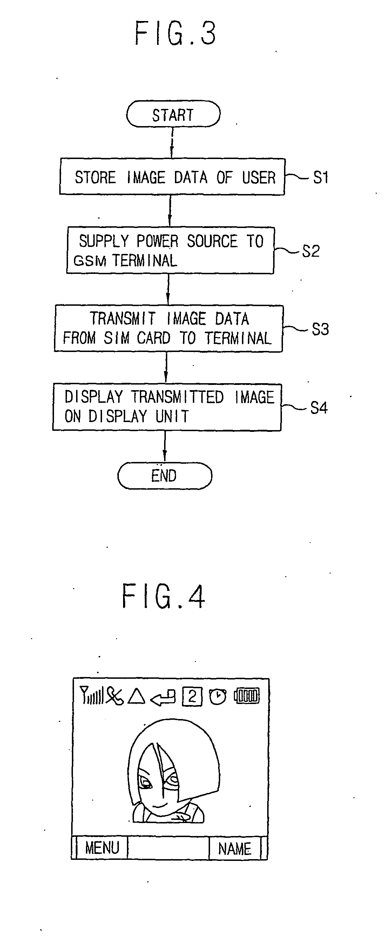

Therefore, as shown in Figure 4, since the image data (photographs) of the SIM card owner are displayed on the LCD screen of the display unit, a user can visually check the SIM card owner. Then, personal certificating operation is performed as in the conventional method.

With the present invention, the user can visually check the SIM card owner by automatically displaying the image data stored in the SIM card when a power source is applied to the GSM terminal.

Also, the present invention can selectively display the image data of the SIM card owner stored in the SIM card, not automatically. Namely, if the power source is applied, the controlling unit 401 has the user select whether the image data is displayed by displaying a certain selection message on the LCD screen of the display unit 406. When the user selects the image data, the controlling unit 401 displays the image data received from the image data storage unit 103 on the LCD screen of the display unit 406.

Also, the present invention can output voice data of the SIM card owner through a speaker 407 when the image data is displayed by storing the voice data of the SIM card owner together with the image data thus to check the SIM card owner more efficiently.

## Claims

1. An apparatus in a GSM terminal comprising:
a display unit (406) of the GSM terminal and a Subscriber Identity Module card (404), herein after referred to as SIM card, including a memory chip (100) for storing image data related to the SIM card owner,
the memory chip (100) comprises an image data storage unit (103) for storing the image data of the SIM card owner, **characterized in that** the GSM terminal is adapted for receiving the image data of the SIM card owner when a power source (402) is switched on and for displaying the image data on the display unit (406) for visually checking the SIM card owner.

2. The apparatus of claim 1, wherein the GSM terminal displays the image data on the display unit (406) automatically or according to an user selection when the power source (402) is switched on.

3. The apparatus of claim 1, wherein the SIM card comprises:
a microprocessor (104) for writing or reading the image data stored in the memory chip (100), wherein the microprocessor (104) reads the image data from the image data storage unit (103) and transmits the data to a GSM terminal when a power source (402) is switched on.

4. The apparatus of claim 3, wherein the memory chip (100) comprises further:
a personal certification storage unit (101) where personal user identification information is stored;
a registration data storage unit (102) where data related to base station registration are stored.

5. An apparatus according to claim 1, further comprising:
a controlling unit (401) for receiving image data of a SIM card owner when a power source (402) is switched on and converting the image data into a displayable form;
an interface unit (405) for interfacing the SIM card (404) and the controlling unit (401).

6. The apparatus of claim 5, wherein the controlling unit (401) outputs the image data to the display unit (406) automatically or according to user selection when the power source (402) is switched on.

7. The apparatus of claim 5, wherein the SIM card (404) comprises further a microprocessor (104) and the memory chip (100) comprises:
a personal certification storage unit (101) where personal user identification information is stored;
a registration data storage unit (102) where data related to base station registration are stored.

8. The apparatus of claim 5, wherein the image data of the owner are downloaded through data transmitted from the base station, PC or wireless Internet.

9. A method for operating a GSM terminal, comprising the steps of:
positioning a Subscriber Identity Module card (404), herein after referred to as SIM card, having a memory chip (100) in which the image data of a SIM card owner is stored, in the GSM terminal,
**characterized by**
transmitting image data of the SIM card owner stored in an image data storage unit (103) of the memory chip (100) arranged on the SIM card (404) in advance to the GSM terminal when a power source is switched on; and
processing the transmitted image data of the SIM card owner and displaying on a display unit (404) for visually checking the SIM card owner.

10. The method of claim 9, wherein the image data of the SIM card owner are downloaded through data transmitted from a base station, PC or wireless Internet.

11. The method of claim 9, wherein the image data are pictures, animations and characters of a SIM card owner.

12. The method of claim 9, wherein the SIM card (404) comprises further:
a microprocessor (104) for writing or reading the image data stored in the image data storage unit (103) of the memory chip (100), wherein the memory chip (100) comprises further:
a personal certification storage unit (101) where personal user identification information is stored;
a registration data storage unit (102) where data related to base station registration are stored.

13. The method of claim 9, further comprising the step of:
displaying a selection message asking whether the image data of the user to be displayed when a power source (402) is switched on.

## Patentansprüche

1. Vorrichtung in einem GSM-Terminal enthaltend:
eine Anzeigeeinheit (406) des GSM-Terminals und eine Subscriber-Identity-Modul-Karte (404), im Folgenden als SIM-Karte bezeichnet, mit einem Speicherchip (100) zur Speicherung von Bilddaten bezüglich des SIM-Kartenbesitzers, wobei der Speicherchip (100) eine Bilddatenspeichereinheit (103) zur Speicherung der Bilddaten des SIM-Kartenbesitzers enthält, **dadurch gekennzeichnet, dass** das GSM-Terminal zum Empfangen der Bilddaten des SIM-Kartenbesitzers eingerichtet ist, wenn eine Spannungsquelle (402) eingeschaltet wird, und zum Anzeigen der Bilddaten auf der Anzeigeeinheit (406), um den SIM-Kartenbesitzer visuell zu überprüfen.

2. Vorrichtung nach Anspruch 1, wobei das GSM-Terminal die Bilddaten automatisch auf der Anzeigeeinheit (406), oder entsprechend einer Benutzerauswahl anzeigt, wenn die Spannungsquelle (402) eingeschaltet wird.

3. Vorrichtung nach Anspruch 1, wobei die SIM-Karte enthält:
einen Mikroprozessor (104) zum Schreiben oder Lesen der im Speicherchip (100) gespeicherten Bilddaten, wobei der Mikroprozessor (104) die Bilddaten aus der Bilddatenspeichereinheit (103) liest und die Daten an ein GSM-Terminal überträgt, wenn eine Spannungsquelle (402) eingeschaltet wird.

4. Vorrichtung nach Anspruch 3, wobei der Speicherchip (100) weiter enthält:
eine private Bestätigungsspeichereinheit (101), in der persönliche Benutzeridentifikationsinformationen gespeichert sind;
eine Anmeldungsdatenspeichereinheit (102), in der Daten bezüglich der Basisstationsregistrierung gespeichert sind.

5. Vorrichtung nach Anspruch 1, weiter enthaltend:
eine Steuereinheit (401) zum Empfang von Bilddaten eines SIM-Kartenbesitzers, wenn eine Spannungsquelle (402) eingeschaltet wird und zum Umwandeln der Bilddaten in eine anzeigbare Form;
eine Schnittstelleneinheit (405) zum Verbinden der SIM-Karte (404) und der Steuereinheit (401).

6. Vorrichtung nach Anspruch 5, wobei die Steuereinheit (401) die Bilddaten automatisch an die Anzeigeeinheit (406) oder entsprechend einer Benutzerauswahl ausgibt, wenn die Spannungsquelle (402) eingeschaltet wird.

7. Vorrichtung nach Anspruch 5, wobei die SIM-Karte (404) weiter einen Mikroprozessor enthält und der Speicherchip (100) enthält:
eine private Bestätigungsspeichereinheit (101), in der persönliche Benutzeridentifikationsinformationen gespeichert sind;
eine Anmeldungsdatenspeichereinheit (102), in der Daten bezüglich der Basisstationsregistrierung gespeichert sind.

8. Vorrichtung nach Anspruch 5, wobei die Bilddaten des Besitzers mittels Daten geladen werden, die von der Basisstation, einem PC oder drahtlos übers Internet übertragen werden.

9. Verfahren zum Betreiben eines GSM-Terminals, umfassend die Schritte:
- Positionieren einer Subscriber-Identity-Modul-Karte (404), im Folgenden als SIM-Karte bezeichnet, mit einem Speicherchip (100), in dem die Bilddaten des SIM-Kartenbenutzers gespeichert sind, in dem GSM-Terminal, **gekennzeichnet durch**
- Übertragen von in einer Bilddatenspeichereinheit (103) des Speicherchips (100) gespeicherten Bilddaten des SIM-Kartenbesitzers, der im Voraus auf der SIM-Karte (404) angeordnet ist, an das GSM-Terminal, wenn eine Spannungsquelle eingeschaltet wird; und
- Verarbeiten der übertragenen Bilddaten des SIM-Kartenbesitzers und Anzeigen auf einer Anzeigeeinheit (404) zum visuellen Überprüfen des SIM-Kartenbesitzers.

10. Verfahren nach Anspruch 9, wobei die Bilddaten des SIM-Kartenbesitzers über Daten geladen werden, die von einer Basisstation, einem PC oder drahtlos übers Internet übertragen werden.

11. Verfahren nach Anspruch 9, wobei die Bilddaten Bilder, Animationen oder Buchstaben eines SIM-Kartenbesitzers sind.

12. Verfahren nach Anspruch 9, wobei die SIM-Karte (404) weiter enthält:
einen Mikroprozessor (104) zum Schreiben oder Lesen der Bilddaten, die in der Bilddatenspeichereinheit (103) des Speicherchips (100) gespeichert sind, wobei der Speicherchip (100) weiter enthält:
eine private Bestätigungsspeichereinheit (101), in der persönliche Benutzeridentifikationsinformationen gespeichert sind;
eine Anmeldungsdatenspeichereinheit (102), in der Daten bezüglich der Basisstatisonsregistrierung gespeichert sind.

13. Verfahren nach Anspruch 9, weiter enthaltend die Schritte:
Anzeigen einer Auswahlmitteilung, die fragt, ob die Bilddaten des Benutzers angezeigt werden sollen, wenn eine Spannungsquelle (402) eingeschaltet wird.

## Revendications

1. Un dispositif dans un téléphone GSM, comprenant:
- une unité d'affichage (406) du téléphone GSM et une carte d'identification de l'abonné *(Subscriber Identity Module Card)* (404), ci-après appelée carte SIM, incluant une puce mémoire (100) pour mémoriser des données d'image concernant le propriétaire de la carte SIM,
- la puce mémoire (100) comprend une unité de mémoire de données d'image (103), pour mémoriser les données d'image du propriétaire de la carte SIM,
**caractérisé en ce que** le téléphone GSM est adapté pour recevoir les données d'image du propriétaire de la carte SIM lorsqu'une unité d'alimentation (402) est allumée, et pour afficher les données d'image sur l'unité d'affichage (406) afin de contrôler visuellement le propriétaire de la carte SIM.

2. Le dispositif selon la revendication 1, dans lequel le téléphone GSM affiche les données d'image sur l'unité d'affichage (406) automatiquement ou, en fonction d'une sélection de l'utilisateur, lorsque l'unité d'alimentation (402) est allumée.

3. Le dispositif selon la revendication 1, dans lequel la carte SIM comprend:
- un microprocesseur (104) pour écrire ou lire les données d'image mémorisées dans la puce mémoire (100), le microprocesseur (104) lisant les données d'image à partir de l'unité de mémoire de données d'image (103), et transmettant les données à un téléphone GSM lorsqu'une unité d'alimentation (402) est allumée.

4. Le dispositif selon la revendication 3, dans lequel la puce mémoire (100) comprend en outre:
- une unité de mémoire de certification personnelle (101), où sont mémorisées les informations personnelles d'identification de l'utilisateur;
- une unité de mémoire de données de déclaration (102), où sont mémorisées les données concernant la déclaration de la station de base.

5. Un dispositif selon la revendication 1, comprenant en outre:
- une unité de commande (401), pour recevoir des données d'image d'un propriétaire de carte SIM lorsqu'une unité d'alimentation (402) est allumée, et pour convertir les données d'image en une forme affichable;
- une unité d'interface (405), pour interfacer la carte SIM (404) et l'unité de commande (401).

6. Le dispositif selon la revendication 5, dans lequel l'unité de commande (401) produit en sortie les données d'image vers l'unité d'affichage (406) automatiquement ou, en fonction d'une sélection de l'utilisateur, lorsque l'unité d'alimentation (402) est allumée.

7. Le dispositif selon la revendication 5, dans lequel la carte SIM (404) comprend en outre un microprocesseur (104), et la puce mémoire (100) comprend:
- une unité de mémoire de certification personnelle (101), où sont mémorisées des informations personnelles d'identification de l'utilisateur;
- une unité de mémoire de données de déclaration (102), où sont mémorisées des données concernant la déclaration de la station de base.

8. Le dispositif selon la revendication 5, dans lequel les données d'image du propriétaire sont téléchargées via des données émises depuis le point d'accès sans fil, le PC ou Internet mobile.

9. Un procédé pour commander un téléphone GSM, comprenant les étapes consistant à:
- positionner une carte d'identification de l'abonné (404), ci-après appelée carte SIM, ayant une puce mémoire (100) dans laquelle les données d'image d'un propriétaire de carte SIM sont mémorisées dans le téléphone GSM,
**caractérisé par** les étapes consistant à
- transmettre, à l'avance, des données d'image du propriétaire de la carte SIM, mémorisées dans une unité de mémoire de données d'image (103) de la puce mémoire (100) disposée sur la carte SIM (404), au téléphone GSM lorsqu'une unité d'alimentation est allumée; et
- traiter les données d'image du propriétaire de la carte SIM transmises et les afficher sur une unité d'affichage (406) pour contrôler visuellement le propriétaire de la carte SIM.

10. Le procédé selon la revendication 9, dans lequel les données d'image du propriétaire de carte SIM sont téléchargées via des données émises depuis une station de base, un PC ou Internet mobile.

11. Le procédé selon la revendication 9, dans lequel les données d'image sont des photos, des animations et des caractères d'un propriétaire de carte SIM.

12. Le procédé selon la revendication 9, dans lequel la carte SIM (404) comprend en outre:
- un microprocesseur (104) pour écrire ou lire les données d'image mémorisées dans l'unité de mémoire de données d'image (103) de la puce mémoire (100), dans lequel la puce mémoire (100) comprend en outre:
- une unité de mémoire de certification personnelle (101), où sont mémorisées les informations personnelles d'identification de l'utilisateur;
- une unité de mémoire de données de déclaration (102), où sont mémorisées les données concernant la déclaration de la station de base.

13. Le procédé selon la revendication 9, comprenant en outre l'étape consistant à:
- afficher un message de sélection demandant si les données d'image de l'utilisateur doivent être affichées lorsqu'une unité d'alimentation (402) est allumée.
